# EUROPÄISCHE PATENTSCHRIFT

(11) **EP 1 857 611 B1**
(45) Veröffentlichungstag und Bekanntmachung des Hinweises auf die Patenterteilung: **21.09.2011**
(21) Anmeldenummer: 07105699.8
(22) Anmeldetag: 05.04.2007
(51) Int. Cl.: E04G 9/02

(54) **Verfahren zum Reparieren der Oberfläche eines plattenförmigen Trägers**
Method for repairing the surface of a plate-shaped carrier
Procédé de réparation de la surface d'un support en forme de plaque

(30) Priorität: 16.05.2006 DE 102006023109
(43) Veröffentlichungstag der Anmeldung: 21.11.2007
(73) Patentinhaber: Hünnebeck Group GmbH, 40885 Ratingen (DE)
(72) Erfinder: Schlenker, Jürgen, Dr., 40885 Ratingen (DE)
(74) Vertreter: Gille Hrabal Struck Neidlein Prop Roos

(56) Entgegenhaltungen:
- EP-A- 0 263 094
- EP-A- 1 273 738
- EP-A- 1 647 651
- WO-A-2007/093158
- DE-A1- 2 500 036
- DE-A1- 10 128 549
- DE-A1- 10 345 810

## Beschreibung

Die Erfindung betrifft ein Verfahren zum Reparieren der Oberfläche eines plattenförmigen Trägers mit einer wenigstens auf einer Seite unter Wärmeeinfluss schmelzbaren Beschichtung. Insbesondere betrifft die Erfindung ein Verfahren zum Reparieren von Schalungselementen, sowie den plattenförmigen Träger bzw, das Schalungselement selber.

Schalungselemente dienen der Errichtung von Betonbauwerken und halten den unausgehärteten Beton in Form bis er ausgehärtet ist. Schalungselemente bestehen in der Regel aus einem Rahmen und einer plattenförmigen Schaltafel, nachfolgend plattenförmiger Träger genannt. Aus der Stand der Technik sind zahlreiche Verfahren zum Reparieren derartiger Schalungselemente bzw. Schaltafeln bekannt:

Es ist bekannt (DE PS 28 48 154), Schalungselemente bzw. Schalplatten aus Holz, beispielsweise Sperrholz, herzustellen. Derartige Schalungselemente haben den Nachteil, dass sie durch eindringende Feuchtigkeit aufquellen. Bei starker Beanspruchung wird die schützende Imprägnierschicht zerstört, und die Oberfläche fasert auf. Daher bietet sie einen zusätzlichen Angriffspunkt für eindringendes Wasser. Auch führen Nagellöcher, die beim Gebrauch in das Schalungselement eingeschlagen werden, zu Beschädigungen der Furnierschicht oder der schützenden Imprägnierschicht, sodass dort ebenfalls Wasser eindringen kann. Schließlich führen Transport und Handhabung der bekannten Schalungselemente im rauen Baustellenbetrieb zu Beschädigungen der mit dem Beton zu erstellenden Oberflächen im Sichtbereich der Schalhaut. Die Lebensdauer derartiger, aus Sperrholz bestehender Schalungselemente ist somit begrenzt.

Bekannte Schalungselemente wie Schaltafeln kann man reparieren, beispielsweise durch Ausspachteln kleiner Beschädigungen oder gar durch Implementieren von Reparaturplättchen bei größerflächigen Beschädigungen, Die Sperrholzplatte wird hierdurch jedoch in ihrer Oberfläche strukturiert, was beim Errichten bzw. Herstellen von Betonoberflächen unerwünscht ist.

Aus Kunststoff bestehende bekannte Schalungselemente (EP 0 250 730 B1 und DE 38 04 506 A1) zeigen zwar auch bei Beschädigungen kein Quellverhalten durch eindringendes Wasser wie Sperrholzplatten, müssen aber ebenso wie Sperrholzplatten aufwendig und manuell im Sichtbereich repariert werden, wenn sie im Gebrauch und insbesondere an der Oberfläche beschädigt wurden. Nach dem Reinigen der Schalungselemente bzw, Schalplatten mittels einem Hochdruckwasserstrahl oder mittels rotierender Bürsten müssen an der Oberfläche vorhandene Kratzer, Nagellöcher und Bohrlöcher ausgebessert werden. Bekannt ist es, thermoplastische Kunststoffe durch Auftragsschweißen mit einem Handschweißgerät auszubessern. Anschließend muss die so gefüllte Schadstelle mit einer von Hand zu führenden Oberfräse wieder eben gefräst werden, Durchbohrungen und flächige Beschädigungen müssen sauber ausgefräst und mit Kunststoffplättchen geschlossen werden. Bei Schalungselementen aus duroplastischen Kunststoffen sind dieselben Instandsetzungsmaßnahmen wie bei einer Sperrholzplatte notwendig,

Trotz sorgfältigster Ausführung von Reparaturmaßnahmen zeichnen sich diese immer wieder an der Oberfläche der mit Hilfe dieser Schalungselemente hergestellten Betonbauwerke sichtbar ab. Vielfach werden Schalungselemente für anstehende Bauprojekte bei den Herstellern und Lieferanten solcher Schalungselemente angemietet, Ein Großteil der benutzten Schalungselemente wird also nicht mehr gekauft und bei Bedarf im eigenen Haus repariert, sondern bedarfsgerecht und voll funktionsfähig gemietet, Der Mieter erwartet eine intakte Oberfläche der Schalhaut ohne Oberflächenstrukturen, und zwar auch bei zuvor von Dritten benutzten Schalungselementen. Der Vermieter muss daher Beschädigungen der Schalungselemente vor dem erneuten Vermieten ausbessern, was nicht nur umständlich ist, sondern auch erhebliche Kosten verursacht.

Schalungselemente, deren plattenförmiger Träger auf eher Seite mit einer die Schalhaut bildenden Folie überdeckt ist, die mittels unter Wärmeeinfluss deaktivierbarem Klebstoff auf dem Träger auswechselbar befestigt ist (EP 1 273 738 A2), sind unter sehr warmen Umgebungsbedingungen nicht optimal einsetzbar, da In heißen Ländern bei starker Sonneneinstrahlung der Klebstoff In unerwünschter Welse deaktiviert, d. h. zähflüssig werden kann.

EP 0 263 094 A offenbart das Beschichten ausgebesserter Leichtbaupaneele, wobei ein Schmelzkleber zur Verbindung genutzt wird.

EP 1 647 651 A offenbart das Ausbessern einer beschichteten Schaltafel durch Abtragen der Oberfläche und Beschichtung mit einem aushärtenden Material, welches nicht thermoplastisch ist.

EP 1 273 738 A offenbart das Ausbessern der Oberfläche von Schalungselementen, wobei die Deckfolie mittels eines unter Wärmeeinfluss deaktivierbaren Klebstoffs auf dem Träger auswechselbar befestigt ist.

Der Erfindung liegt daher die Aufgabe zu Grunde, ein verbessertes Verfahren zum Reparieren von Schalplatten bzw, Schalungselementen anzugeben.

Diese Aufgabe wird erfindungsgemäß mit einem Verfahren zum Reparieren der Oberfläche eines plattenförmigen Trägers gemäß Anspruch 1 gelöst. Die Aufgabe wird ferner gelöst durch einen plattenförmigen Träger gemäß dem unabhängigen Anspruch 19. Vorteilhafte Ausgestaltungen sind Gegenstand der Unteransprüche.

Erfindungsgemäß ist zunächst vorgesehen, dass eine Schalungsplatte eine unter Wärmeeinfluss schmelzbare Beschichtung aufweist, die nach Beschädlgung zunächst teilweise abgetragen wird, wobei der abgetragene Teil durch eine neue Deckfolie ersetzt wird, die durch Schweißen mit der Restbeschichtung verbunden wird. Beim Reparieren der Schalplatten müssen daher nicht aufwendig einzelne schadstellen der Beschichtung bzw. Schalhaut ausgebessert werden. Es können vielmehr großflächig Industriell hergestellte Folien mit guter Oberflüchenqualltät aufgebracht werden, Verglichen mit anderen Fügetechniken, wie z.B. dem Kleben ergeben sich dabei folgende Vorteile: Ein erneutes Reparieren der Schalfläche ist bei Klebern schwieriger, da es sich um einen Materialverbund handelt. Es ist schwierig die Kleberrückstände vollständig zu beseitigen, was auch die Fügequalität mindert. Ein mit Klebstoff versehener Untergrund ist schwerer vorzubereiten, so dass die Restbeschichtung mit jeder erneuten Reparatur etwas tiefer abgetragen werden müsste. Beim Entfernen der Oberseite der Beschichtung, z,B, durch Fräsen, würde es zu Reißen, Schmieren und unkontrolliertem Abtragbewegungen kommen, Der Abfall besteht darüber hinaus aus mehreren Komponenten, was das Recycling bzw, die Entsorgung schwieriger macht. Das flächige Aufbringen von Klebern ist schwieriger und meist mit dem Freiwerden von Lösungsmitteln verbunden, Kleber benötigen ferner Aushärtzeiten, die den Herstellvorgang verzögern. Das Aufschweißen einer neuen Deckfolie, insbesondere wenn Deckfolien und Restbeschichtung aus dem gleichen Material bestehen und beim Schweißen keine Zusatzstoffe hinzugegeben werden, kann nahezu beliebig oft erfolgen. Dadurch verlängert sich die Lebensdauer der Schalplatte,

Die derart gestalteten Schalplatten bzw. Schalelemente genügen besonders gut den betrieblichen Anforderungen nach Preis, einfacher gegebenenfalls voll- bzw, teilautomatisierbarer Reparatur, Robustheit und Oberflächenqualität, Die Oberfläche eines Schalungselementes kann in einfacher Weise kostengünstig so wiederverwendbar gestalten werden, wobei sich auf der dem Beton eines eingeschalten Bauwerkes zugewandten Oberfläche der Schalhaut keine Fehler-, Reparatur- bzw. Schwachstellen abzeichnen,

Erfindungsgemäß kann, die als Oberfläche vorgesehene beschädigte Schalhaut bzw. Schalfolie der Schaltafel eines mehrschichtigen Schalungselementes bzw. -tafel in einfacher Weise ausgetauscht und erneuert werden. Beispielsweise lassen sich Schalungselemente einer Modulrahmenschalung auf diese Weise für die Wiederverwendung präparieren. Zum Erneuern der Schalhaut wird diese gezielt teilweise abgetragen, ohne das Trägersystem selbst unbrauchbar zu machen und zu beschädigen. Nach dem Entfernen der Oberfläche der verschlissenen und beschädigten Schalfolie wird auf die wiederverwendbare Schaltafel eine neue Deckfolie oder Schalfolie aufgebracht und an dieser befestigt, Beschädigungen der Schaltafel bzw. des Trägersystems zeichnen sich wegen der aufgebrachten neuen vollflächigen Oberfläche nicht auf der Oberfläche des Schalungselementes ab, Gemäß der Erfindung kann ein mehrschichtiges Schalungselement mit angemessenem Fertigungsaufwand unter Vermeidung zeitintensiver Reparatur und Ausbesserungsarbeiten der Schalhaut zur Wiederverwendung geeignet gemacht werden, ohne dass sich auf der Oberfläche des Schalungselementes störende Oberflächenstrukturen abzeichnen, Es werden also verkratzte oder sonst wie beschädigte Oberflächen von Schalungselementen durch neue Schalhäute oder Schalfolien ersetzt, Mit anderen Worten wird erfindungsgemäß das ausgebildete Schalungselement bzw. der Träger auf der dem Beton zugewandten Seite mit einer neuen Schalfolie beschichtet. Das erfindungsgemäße Schalungselement besteht daher aus wenigstens zwei Haupt- Funktionselementen, nämlich einem Trägersystem bzw. der Schaltafel und einer Beschichtung, d. h. Schalfolie bzw. Schalhaut, deren Oberfläche abgetragen und neu aufgeschweißt werden kann. Die Schalfolie bildet die eigentliche Kontaktfläche zum Beton und ist für die Oberflächenstrukturierung sowie die Oberflächenqualität des Betons verantwortlich, Das Trägersystem bzw, die Schaltafel selbst ist so ausgebildet, dass es bzw, sie die erforderliche Tragfähigkeit liefert. Dabei können auch mehrschichtige Systeme verwendet werden, um die Schaltafel bzw, das Trägersystem zu verstärken.

Das Fräsen ist ein gut kontrollierbares Verfahren zum großflächigen Entfernen dünner Schichten und wegen des hohen Abtrags besser als das Schleifen geeignet. Dabei sind Messerfräsen bevorzugt, da sie besser an das weiche duktile Material der Beschichtung angepasst sind. Wenn bei der Messerfräse eine Vielzahl von Messern eingesetzt sind, kann unerwünschtes Rattern verhindert werden. Die Messer können nämlich derartig über die Messerfräse verteilt werden, dass nicht alle gleichzeitig bzw, unter dem gleichen Winkel im Einsatz sind. Die in axialer Richtung verteilten Messer greifen daher zu geringfügig verschiedenen Zeitpunkten in die Oberfläche der Beschichtung ein, Üblicherweise ist dabei eine kleine Überlappung des Eingriffsbereichs benachbarter Messer vorgesehen, damit im Vorschubrichtung verlaufende Grate ausgeschlossen werden, In Abhängigkeit der Parameter Vorschubgeschwindigkeit (d.h, Relativbewegung zwischen Fräse und Träger), Durchmesser der Fräse, Anzahl der Klingen und Umdrehungsgeschwindigkeit der Fräse ergibt sich eine vollkommen plane oder leicht wellige Oberfläche der Restbeschichtung. Eine leichte Welligkeit kann sogar gewünscht sein, um beim Verschweißen das Aufschmelzen der Restbeschichtung zu erleichtern. Auch können dadurch Inhomogenitäten beim Aufschmelzen ausgeglichen werden, wenn die Deckfolie auf die Restbeschichtung gedrückt wird.

Um plötzliche Belastungen beim Eingriff des Fräswerkzeugs auf die Oberfläche des Trägers und damit verbundene Bearbeitungsungenauigkeiten zu verhindern, ist der Fräser in Bezug auf den Vorschub schräg angeordnet. Das heißt, der Fräser greift nicht gleichzeitig über die gesamte Kantenlänge einer in den Fräserbereich gelangenden Platte ein, sondern beginnt beispielsweise bei der linken vorderen Kante der Platte und erfasst erst beim weiteren Vorschub die gesamte Breite der Platte. Dadurch werden mechanische Belastungen reduziert und die Oberflächenqualität verbessert,

Das Verfahren wird bevorzugt kontinuierlich durchgeführt, damit keine großflächige, mit hohen Investitionen verbundene Aufschmelzung notwendig wird, Beim kontinuierlichen Verfahren verläuft das Schweißen über die Länge des Trägers, wobei in einem stark begrenzten Gebiet unmittelbar hintereinander aufgeschmolzen und verschweißt wird.

Beim Aufschmelzen der Deckfolie ist es völlig ausreichend, lediglich die Unterseite in den flüssigen Zustand zu bringen, so dass weniger Energie verbraucht wird und weniger Zeit benötigt wird, Die Stärke der Deckfolie sowie deren Oberfläche bleibt im wesentlichen erhalten.

Beim Verschweißen soll kein zusätzlichen Material zwischen Restbeschichtung und Deckfolien eingebracht werden. Damit verändert sich auch bei mehrmaligem Reparieren der Beschichtung deren chemische Zusammensetzung nicht. Es kann immer wieder mit reproduzierbarer Qualität und mit den gleichen Parametern die verschlissene Oberseite abgetragen werden und eine neue Deckfolie aufgeschweißt werden. Das abgetragene Material ist sortenrein und daher besser recycelbar.

Beim Verschweißen werden Wärmestrahler, insbesondere Infrarotwärmestrahler, Kurzwellen-Zwillingsrohrstrahler und dergleichen eingesetzt. Dabei handelt es sich um eine unkomplizierte preiswerte Technik, deren Heizleistung reproduzierbar und stufenlos in weiten Grenzen, gegebenenfalls automatisch prozessabhängig verstellt und angepasst werden kann.

Wenn die Deckfolie um eine Rolle herum im Bereich der Schweißzone geführt wird, ist in der Schweißzone aus einer Richtung gleichzeitig die Unterseite der Deckfolie und die Oberseite der Restbeschichtung sichtbar. Daher können mit einem Wärmestrahler gleichzeitig beide Folien erwärmt werden. Zum Optimierung des Aufschmelzprozesses kann es dabei zweckmäßig sein, dass der Wärmestrahler verschwenkbar ist, damit die Wärmeeinbringung zu Gunsten der Deckfolie oder der Restbeschichtung verlagert werden kann.

Die Rolle zum Umlenken der Deckfolie kann dabei gleichzeitig die Deckfolie gegen die Restbeschichtung andrücken und somit den eigentlichen Schweißvorgang einleiten bzw. unterstützen. Vorteilhafterweise ist die Wärmeverteilung dabei so gestaltet, dass beim Verlassen der Rolle das Material bereits ausreichend abgekühlt bzw. erhärtet ist. Dies kann alternativ auch durch weitere dahinterliegende Andrückrollen geschehen.

Ein Richten des reparierten Trägers ist notwendig, da nach dem Verschweißen in Folge der auftretenden Abkühlungsspannungen ein Verbiegen des Trägers auftritt, Die Durchbiegung kann durch übliches Richten nach dem Verschweißen korrigiert werden. Vorteilhaft ist jedoch ein Vorbiegen nach dem Fräsen und vor dem Verschweißen: Nach dem Fräsen, bei dem durch das Entfernen eines Teils der Beschichtung ebenfalls eine Durchbiegung der Platte auftritt, wäre ohnehin ein Richten vor dem Schweißen erforderlich. Aus diesem Grund wird erfindungsgemäß vorgeschlagen, das ohnehin nach dem Abfräsen notwendige Richten direkt so vorzunehmen, dass eine Vorbiegung des Trägers entsteht, die durch die beim Verschweißen eingebrachten Eigenspannungen wieder neutralisiert werden kann. Somit ist nur ein Richtvorgang an Stelle von zwei Richtvorgängen notwendig. Eine weitere Maßnahme gegen Durchbiegen durch Eigenspannungen ist das beidseitige Einbringen von Wärme während des Verschweißens um symmetrisch Spannungen zu erzeugen.

Je nach Ausgestaltung der Schalungselemente, bei denen in einem stabilitätgebenden Rahmen die oben beschriebenen Schalplatten bzw. plattenförmigen Träger eingesetzt sind, kann es notwendig sein, die Träger aus dem Rahmen auszubauen. Auch wenn der Ausbau technisch nicht zwingend notwendig ist, so bietet er doch Vorteile in Bezug auf den Transport der Träger zur Reparaturanlage. Die Träger, die ja im Wesentlichen nur aus einer Platte bestehen, können wesentlich raumsparender gestapelt werden. Die hintereinander liegenden Träger können in kontinuierlichen Beschichtungsverfahren sehr effektiv repariert werden. Sofern es die Größe und die Geometrie des Schalungselements zulässt, ist es bevorzugt, das Schalungselement erfindungsgemäß zu reparieren ohne den zeitaufwändigen Ausbau des Trägers.

Wenn das erfindungsgemäße Verfahren mehrfach wiederholt wird, verlängert sich die Lebensdauer des Trägers. Das Verfahren kann auch zu beiden Seiten des Trägers durchgeführt werden, sofern die Trägerplatte entsprechend, beispielsweise symmetrisch ausgestaltet ist, Dadurch verdoppelt sich die praktische Lebensdauer der Platte. Bei eventuell auftretenden nichtreparablen Beschädigungen der einen Seite, kann zumindest die zweite Seite weiter benutzt werden.

Der erfindungsgemäß beschriebene Träger, mit Ausnahme der durch Aufschweißen einer neuen Deckschicht reparierten Beschichtung, ist grundsätzlich im Schalungsbau bekannt, zum Beispiel unter dem Markennamen LAMINAEX AI PP der Fa. Isosport, A-7000 Eisenstadt. Dabei handelt es sich um Platten mit einem Kern aus extrudiertem PP Schaum.. Zur Verstärkung, d.h. der Erhöhung des Biegewiderstandes, sind beidseitig Verstärkungsplatten aus Aluminium vorgesehen, Auf diese ist durch ein spezielles Endlosverfahren eine Folie aus PP als schalhautbildende Beschichtung aufgebracht. Diese ist vom ausgehärteten Beton leicht lösbar. Der anspruchsvoll herzustellende Verbindung zwischen Aluminiumplatte und PP Material kann damit sicher und industriell durchgeführt werden, Die Verbindung zwischen den Materialien bleibt über die gesamte Lebensdauer erhalten, da sie nicht beim Wiederaufbereiten des Trägers abgetragen wird. Daher sind für das Wiederbeschichten nur einfach aufgebaute Werkzeuge nötig.

Die erfindungsgemäßen Schalungselemente bzw, Träger können je nach der Höhe der mechanischen Belastung beispielsweise jeweils einen drei- oder fünfschichtigen Aufbau aufweisen, jedoch ist auch ein zwei-, vier- oder mehrschichtiger Aufbau möglich, Als Werkstoff für das Trägersystem bzw, die Schaltafel werden Kunststoffe mit und ohne Verstärkungen oder auch Holzstoffe wie Sperrholz oder Spanplatten eingesetzt. Auch metallische Werkstoffe, insbesondere Stahl, Aluminium und andere Werkstoffe, sind denkbar. Für die Schalungselemente, insbesondere bei Wandschalungen und -stützen, muss eine ausreichende Steifigkeit gegeben sein. Das Trägersystem kann daher, wenn notwendig, durch eine Metallfolie oder auch durch Fasern verstärkt werden. Die Schalfolie kann eine Folie oder Platte aus Kunststoff, vorzugsweise Polypropylen (PP), Polyethylen (PE) und/oder Polyvinylchlorid (PVC) sein. Das erfindungsgemäße Schalungselement ist konstruktiv als Verbundkonstruktion ausgebildet, In Sandwich-Bauweise sind die einzelnen Funktionsschichten miteinander verbunden. Die einzelnen Funktionsschichten werden durch Klebstoffe miteinander verbunden.

Die anspruchsgemäß genannten Maße haben sich als günstiger Kosten-Nutzen Kompromiss ergeben, Insbesondere das Verhältnis der Restbeschichtung zur Stärke der Beschichtung ist so gewählt, dass die neue Deckfolie nicht unnötig dick ist und andererseits auch bei gröberen Beschädigungen eine gute Oberflächenqualität gewährleistet ist.

Die Wiederbeschichtung des gesamten Modulrahmen-Schalungselementes führt zu einer wesentlichen Reduzierung der Reinigungs- und Reparaturkosten, da zudem der Schalhautaus- und einbau entfällt. Die gesäuberten Modulrahmen-Schalungselemente werden ihrer Breite und Höhe nach vorkonfektioniert und anschließend der Wiederbeschichtungsanlage zugeführt. Es ist auch möglich, den Reinigungsvorgang in die Wiederbeschichtungsanlage zu integrieren. Im anschließenden Abtrageprozess wird die Oberfläche von dem Trägersystem entfernt. Bleibt das Trägersystem während des gesamten Abtrage- und Wiederbeschichtungsprozess mit dem Rahmen verbunden, sind Befestigungselemente wie Nieten oder Schrauben zwischen Trägersystem und Rahmen so ausgelegt, dass diese den Wiederbeschichtungsprozess nicht negativ beeinflussen,

Durch das Verfahren können automatisch, kostengünstig und mit definierter Oberfläche besonders große Platten aufbereitet werden, Große Platen haben mindestens eine Länge von mehr als 2 m , vorzugsweise 2,40 m. Die Breite beträgt je nach Element mindestens 30 cm, vorzugsweise 75 - 90 cm.

Die Oberseite der Beschichtung bzw, der Deckfolie ist glatt, d. h, sie hat eine solche Oberfläche, dass sich die üblicherweise erwünschte glatte Sichtbetonfläche ergibt.

Weitere Vorteile ergeben sich aus der folgenden Beschreibung und der beigefügten Zeichnung. Die erwähnten Ausführungsbeispiele sind nicht abschließend zu verstehen und haben beispielhaften Charakter. Dabei zeigt:
- Fig. 1:: eine aus dem Stand der Technik bekannte Schalplatte,
- Fig. 2:: die Schalplatte aus Fig. 1 nach Abfräsen der Oberseite;
- Fig. 3:: das Verschweißen einer neuen Deckfolie auf die Restbeschichtung; und
- Fig. 4:: den reparierten Träger aus Fig. 1.

Der Schalträger 1 aus Fig, 1 verfügt über einen geschäumten Kern 2 aus PP , der beidseitig mit einer Verstärkungsschicht aus Aluminiumblech 3,3' versehen ist. Die Oberfläche 5 des symmetrisch aufgebauten Schalträgers wird gebildet durch eine mit den Aluplatten verbundene Schicht aus PP Folie 4,4'. Die Oberfläche 5 weist Beschädigungen 48 auf, die sogar bis in den Kern 2 reichen,

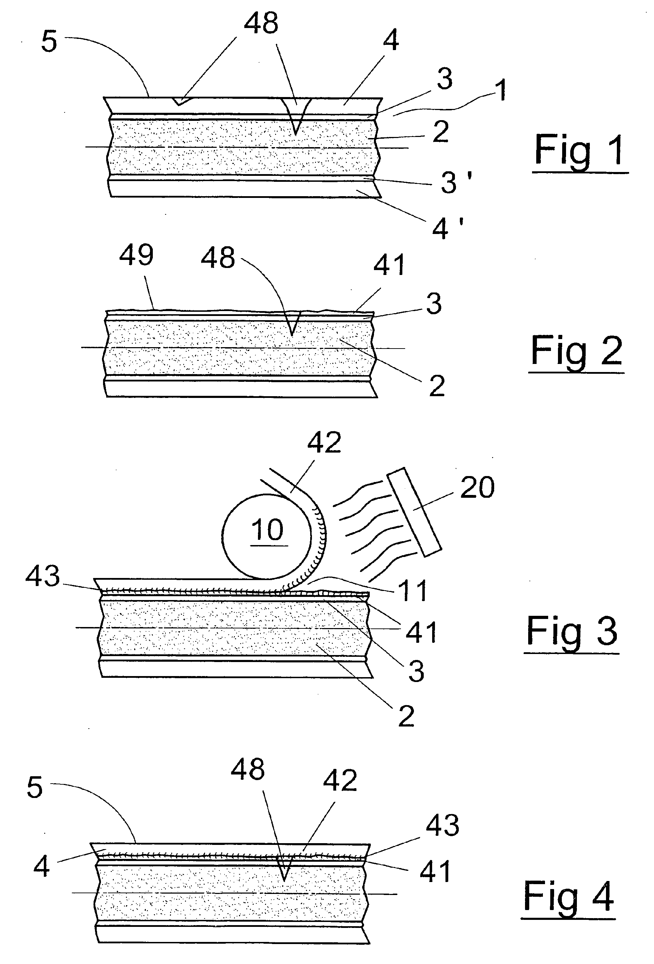

Fig. 2 zeigt die Schalplatte nach Abtragen der Oberseite durch eine Messerfräse. Von der Folie 4 ist lediglich eine Restbeschichtung 41 geblieben. Die Restbeschichtung weist eine wellenförmige Oberfläche 49 auf, die von der Messefräsenbearbeitung herrührt,

Fig. 3 zeigt schematisch das Verschweißen einer neuen Deckfolie 42 mit der Restbeschichtung 41, Im kontinuierlichen Verfahren (Relativbewegung des Trögers nach links) wird die neue Deckfolie 42 der Schalplatte zugeführt, um die Rolle 10 umgelenkt und von der Rolle 10 gegen die Restbeschichtung 41 gedrückt. Dabei ist zu erkennen, dass die noch zu verschweißende Oberseite der Restbeschichtung 41, sowie die um die Rolle 1 0 geführte Deckfolie auf der Unterseite dem Wärmestrahler 20 zugewandt sind. Der Wärmestrahler wirkt auf die gemeinsame Fügezone 11 und kann daher gleichzeitig beide Schichten 41, 42 erwärmen und aufschmelzen. Die Umlenk- und Andrückrolle 10 sorgt gleichzeitig für die Exponierung der Unterseite der Deckfolie und das Anpressen der jeweiligen aufgeschmolzenen Schichten (schraffiert dargestellt). Es ergibt sich dabei eine Schweißzone 43.

Fig. 4 zeigt die fertig aufbereitete Schalplatte mit der neuen Deckfolie 42, die über eine glatte Oberfläche 5 verfügt. Die Beschädigung 48 hat nunmehr keine Auswirkungen mehr auf die Oberflächenqualität, Eventuell überstehende Ränder der Deckfolie über die Restbeschichtung können gegebenenfalls entfernt werden, Die Beschichtung 4 besteht nun praktisch aus einer durchgängigen Beschichtung aus PP, wobei jedoch eine Schweißzone 43 nachweisbar ist. Insofern ist die reparierte Beschichtung im Vergleich zu einer nicht erfindungsgemäß ausgebesserten Beschichtung nicht völlig homogen.

## Patentansprüche

1. Verfahren zum Reparieren der Oberfläche (5) eines plattenförmigen Trägers (1), der wenigstens auf einer Seite mit einer unter Wärmeeinfluß schmelzbaren Beschichtung (4) beschichtet ist, wobei die Unterseite der Beschichtung mit dem Träger verbunden ist und die Oberseite der Beschichtung die Oberfläche bildet, mit folgenden Schritten:
a) Abtragen der Oberseite der Beschichtung so dass eine Restbeschichtung (41) auf dem Träger verbleibt;
b) Aufbringen und Fügen einer neuen Deckfolie (42) auf die Restbeschichtung (41) durch Schweißen, wobei die untere Restbeschichtung (41), die mittlere Schweißzone (43) und die Deckschicht (42) aus dem gleichen Material bestehen, insbesondere aus PP.

2. Verfahren nach Anspruch 1, wobei das Abtragen der Oberseite der Beschichtung durch Fräsen, Insbesondere Messerfräsen erfolgt.

3. Verfahren nach Anspruch 2, wobei beim Messerfräsen eine Fräse mit einer Vielzahl von Messern eingesetzt wird.

4. Verfahren nach einem der vorherigen Ansprüche, wobei die Messer der Messerfräse in axialer Richtung so vertellt und angeordnet sind, dass diese in Rotationsrichtung versetzt angeordnet sind, so dass benachbarte Messer zu unterschiedlichen Zeiten im Eingriff sind, wobei insbesondere eine Überlappung in axialer Richtung von benachbarten Messern vorgesehen ist.

5. Verfahren nach einem der vorherigen Ansprüche, wobei der Vorschub relativ zwischen Fräse und Träger derart eingestellt ist. dass die Welligkelt der Oberfläche der Restbeschlchtung kleiner als zwischen 0,02 mm ist oder zwischen 0,005 mm und 0,02 mm mm beträgt.

6. Verfahren nach einem der vorherigen Ansprüche, wobei die Fräse derartig In Bezug auf den Vorschub angeordnet Ist, dass über die Breite des Trägers die Fräse nicht gleichzeitig in Eingriff kommt.

7. Verfahren nach einem der vorherigen Ansprüche, wobei die Oberseite der Beschichtung in einem Arbeitsgang abgetragen wird.

8. Verfahren nach einem der vorherigen Ansprüche, wobei beim Schweißen lediglich die Unterseite der Deckfolle (42) aufgeschmolzen wird.

9. Verfahren nach einem der vorherigen Ansprüche, wobei beim Schweißen kein zusätzliches Material zwischen Restbeschichtung (41) und Deckfolle (42) eingebracht wird.

10. Verfahren nach einem der vorherigen Ansprüche, wobei die Deckfolle kontinuierlich mit dem Träger verschweißt wird.

11. Verfahren nach einem der vorherigen Ansprüche, wobei die Deckfolie um eine Rolle (10) Im Bereich der Schweißzone (11) geführt wird, wobei die Unterseite der Deckfolie (42) insbesondere durch Wärmestrahler (20) erwärmt wird.

12. Verfahren nach Anspruch 11, wobei der Wärmestrahler auf die Unterseite der Deckfolie (42) und die freillegende Oberseite der Restbeschichtung (41) wirkt.

13. Verfahren nach einem der vorherigen Ansprüche, wobei die Deckfolie (42) beim Schweißen von der Rolle (10) gegen die Restbeschlchtung gedrückt wird.

14. Verfahren nach einem der vorherigen Ansprüche, wobei weitere Andrückrollen vorgesehen sind.

15. Verfahren nach einem der vorherigen Ansprüche, wobei Maßnahmen zum Richten des reparierten Trägers durchgeführt werden, insbesondere Richten nach dem Verschweißen, Vorblegen entgegen der zu erwartenden Eigenspannungen nach dem Fräse und vor dem Verschweißen oder gleichzeitige Wärmeeinbringung zu beiden Selten des Trägers beim Verschweißen.

16. Verfahren nach einem der vorherigen Ansprüche, mit folgendem Schritten:
c) Ausbau des plattenförmigen Trägers (1) aus dem Rahmen eines Schalungselements vor Schritt a);
d) Einbau des plattenförmigen Trägers (1) in den Rahmen des oder eines anderen Schalungselements nach Schritt b).

17. Verfahren nach einem der vorherigen Ansprüche mit folgenden Schritten:
e) Einsatz des Trägers und Beschädigung der Oberfläche des Trägers nach Schritt b) oder d);

18. Verfahren nach dem vorherigen Anspruch; wobei das Verfahren mehrfach wiederholt wird und/oder zu beiden Selten des Trägers durchgeführt wird.

19. Plattenförmiger Träger (1), insbesondere ein nach den vorherigen Verfahrensansprüchen reparierter Träger,
der wenigstens auf der Oberseite mit einer unter Wärmeeinfluss schmelzbaren Beschichtung (4) beschichtet ist, die die Oberfläche des Trägers bildet, mit
- einer unteren Restbeschichtung (41),
- einer mittleren Schweißzone (43), und
- einer Deckschicht (42), die die Oberfläche des Träges bildet,
wobei die untere Restbeschichtung (41), die mittlere Schweißzone (43) und die Deckschicht (42) aus dem gleichen Material bestehen, insbesondere aus PP und
wobei lediglich die Unterseite der Deckfolie (42) aufgeschmolzen ist.

20. Träger nach einem der vorherigen Ansprüche, **dadurch gekennzeichnet, dass** die unter Wärmeelnfluss schmelzbare Beschichtung (4, 4') beidseitig des Trägers vorgesehen ist, wobei die Beschichtung (4') an der Unterseite des Trägers vollkommen homogen ist.

21. Träger nach einem der vorherigen Ansprüche, **dadurch gekennzeichnet, dass** der Träger einen Kern (2) aus Kunststoff, Schaummaterial, PP, locker gepressten PP Partikeln und/oder extrudiertem PP-Schaum aufweist.

22. Träger nach einem der vorherigen Ansprüche, **dadurch gekennzeichnet, dass** der Träger eine Verstärkungsschicht (3), insbesondere aus Metall, vorzugsweise Aluminium aufweist.

23. Träger nach einem der vorherigen Ansprüche, **dadurch gekennzeichnet, dass** die Verstärkungsschicht (3) zwischen Kern (2) und Beschichtung (4) liegt.

24. Träger nach einem der vorherigen Ansprüche, **dadurch gekennzeichnet, dass** die Verstärkungsschicht (3,3') zu beiden Seiten des Kerns (2) liegt.

25. Träger nach einem der vorherigen Ansprüche, **dadurch gekennzeichnet, dass** der Träger einen symmetrischen Aufbau hat, wobei die Beschichtung (4') an der Unterseite des Trägers auch vollkommen homogen sein kann.

26. Träger nach einem der vorherigen Ansprüche, **dadurch gekennzeichnet, dass** der Kern eine Dicke von 8 - 20 mm, aufweist;
die Verstärkungsschicht aus Aluminium eine Stärke von 0,3 -0,6 mm, vorzugsweise 0,35 - 0,45 mm aufweist;
die Beschichtung eine Stärke von 0,8 - 1,5 mm, vorzugsweise 1,2 - 1,4 mm aufweist; und/oder
die Stärke der Restbeschichtung 10 - 50 %, vorzugsweise 20 - 40 % der Stärke der Beschichtung ausmacht.

27. Träger nach einem der vorherigen Ansprüche, **dadurch gekennzeichnet, dass** der Träger derart tragfähig ist, dass er unausgehärteten Beton in Form halten kann und die Beschichtung derart ist, dass sie eine Sichtbetonfläche formen kann und vom ausgehärteten Beton leicht lösbar ist.

28. Schalungselement mit einem darin eingesetzten Träger nach einem der vorherigen Ansprüche.

## Claims

1. Method for repairing the surface (5) of a board-shaped carrier (1) coated on at least one side with a coating (4) that is meltable under the influence of heat, wherein the underside of the coating is connected with the carrier and the top side of the coating forms the surface, comprising the following steps:
a) removing the top side of the coating so that a remaining coating (41) remains on the carrier;
b) applying and joining a new cover foil (42) onto the remaining coating (41) by welding, wherein the lower remaining coating (41), the intermediate welding zone (43) and the cover layer (42) consist of the same material, in particular PP:

2. Method according to claim 1, wherein the removal of the top side of the coating is carried out by milling, in particular blade milling.

3. Method according to claim 2, wherein a milling machine having a plurality of blades is used during blade milling.

4. Method according to any one of the preceding claims, wherein the blades of the blade milling machine are distributed and arranged in the axial direction such that they are arranged in an offset manner in the direction of rotation, so that adjacent blades are biting at different times, wherein, in particular, an overlap in the axial direction of adjacent blades is provided.

5. Method according to any one of the preceding claims, wherein the relative feed between mill and carrier is set such that the waviness of the surface of the remaining coating is smaller than between 0.02 mm or is between 0.005 mm and 0.02 mm.

6. Method according to any one of the preceding claims, wherein the milling machine is arranged, in relation to the feed, such that the milling machine does not bite at the same time over the width of the carrier.

7. Method according to any one of the preceding claims, wherein the top side of the coating is removed in a single process step.

8. Method according to any one of the preceding claims, wherein only the underside of the cover foil (42) is melted on during welding.

9. Method according to any one of the preceding claims, wherein no additional material is inserted between the remaining coating (41) and the cover foil (42) during welding.

10. Method according to any one of the preceding claims, wherein the cover foil is continuously welded to the carrier.

11. Method according to any one of the preceding claims, wherein the cover foil is guided around a roller (10) in the area of the welding zone (11), the underside of the cover foil (42) being heated in particular by means of heat lamps (20).

12. Method according to claim 1 1, wherein the heat lamp acts on the underside of the cover foil (42) and the exposed top side of the remaining coating (41).

13. Method according to any one of the preceding claims, wherein the cover foil (42) is pressed by the roller (10) against the remaining coating during welding.

14. Method according to any one of the preceding claims, wherein further pinch rollers are provided.

15. Method according to any one of the preceding claims, wherein measures are carried out for straightening the repaired carrier, in particular straightening after the welding, pre-bending in the opposite direction to the internal stresses to be expected after milling and before welding, or simultaneous introduction of heat on both sides of the carrier during welding.

16. Method according to any one of the preceding claims, comprising the following steps:
c) removal of the board-shaped carrier (1) from the frame of a formwork element prior to step a);
d) inserting a board-shaped carrier (1) into the frame of the formwork element or another one after step b).

17. Method according to any one of the preceding claims, comprising the following steps:
e) use of a carrier and damage of the surface of the carrier after step b) or d);

18. Method according to the preceding claim, wherein the method is repeated several times and/or is performed on both sides of the carrier.

19. Board-shaped carrier (1), in particular a carrier repaired according to the preceding method claims,
which is coated on the top side with a coating (4) meltable under the influence of heat, which forms the surface of the carrier, comprising
- a bottom remaining coating (41),
- an intermediate welding zone (43), and
- a cover layer (42) forming the surface of the carrier
wherein the bottom remaining coating (41), the intermediate welding zone (43) and the cover layer (42) consist of the same material, in particular of PP, and
wherein only the underside of the cover foil (42) is melted on.

20. Carrier according to any one of the preceding claims, **characterized in that** the coating (4, 4') meltable under the influence of heat is provided on both sides of the carrier, wherein the coating (4') on the underside of the carrier is perfectly homogeneous.

21. Carrier according to any one of the preceding claims, **characterized in that** the carrier has a core (2) of plastic, foam material, PP, loosely pressed PP particles and/or extruded PP-foam.

22. Carrier according to any one of the preceding claims, **characterized in that** the carrier has a reinforcement layer (3), in particular of metal, preferably aluminum.

23. Carrier according to any one of the preceding claims, **characterized in that** the reinforcement lacer (3) lies between the core (2) and the coating (4).

24. Carrier according to any one of the preceding claims, **characterized in that** the reinforcement layer (3,3') lies on both sides of the core (2).

25. Carrier according to any one of the preceding claims, **characterized in that** the carrier has a symmetrical configuration, wherein the coating (4') on the underside of the carrier can also be perfectly homogeneous.

26. Carrier according to any one of the preceding claims, **characterized in that** the core has a thickness of 8 - 20 mm; the reinforcement layer of aluminum has a thickness of 0.3 - 0.6 mm, preferably of 0.35 - 0.45 mm;
the coating has a thickness of 0.8 - 1.5 mm, preferably of 1.2 - 1.4 mm; and/or
that the thickness of the remaining coating amounts to 10% - 50%, preferably 20 - 40 % of the thickness of the coating.

27. Carrier according to any one of the preceding claims, **characterized in that** the carrier has such a load-bearing capacity that it can keep unhardened concrete in shape and the coating is such that it is capable of forming an exposed-concrete surface and is easily detachable from the hardened concrete.

28. Formwork element comprising a carrier according to any one of the preceding claims that is used therein.

## Revendications

1. Procédé de réparation de la surface (5) d'un support (1) sous forme de plaque dont au moins une face est revêtue d'un revêtement (4) fusible sous effet thermique, la face inférieure du revêtement étant reliée au support et la face supérieure du revêtement formant la surface, comprenant les étapes suivantes :
a) enlèvement de la face supérieure du revêtement de sorte qu'un revêtement résiduel (41) reste sur le support ;
b) application et montage d'une nouvelle feuille de recouvrement (42) sur le revêtement résiduel (41) par soudage, le revêtement résiduel inférieur (41), la zone de soudage intermédiaire (43) et la couche supérieure (42) consistant en la même matière, notamment en polypropylène.

2. Procédé selon la revendication 1, dans lequel l'enlèvement de la face supérieure du revêtement se fait par fraisage, notamment par fraisage à couteaux.

3. Procédé selon la revendication 2, dans lequel on utilise une fraise comprenant une pluralité de couteaux pour le fraisage à couteaux.

4. Procédé selon l'une des revendications précédentes, dans lequel les couteaux de la fraise couteaux sont répandus et disposés en direction axiale de sorte que ceux-ci sont disposés de manière décalée dans la direction de rotation de manière que des couteaux voisins sont en prise aux heures différentes, un chevauchement en direction axiale des couteaux voisins étant notamment prévu.

5. Procédé selon l'une des revendications précédentes, dans lequel l'avance relative entre la fraise et le support est réglée de sorte que l'ondulation de la surface du revêtement résiduel est inférieure à 0,02 mm ou est comprise entre 0,005 mm et 0,02 mm.

6. Procédé selon l'une des revendications précédentes, dans lequel la fraise est disposée par rapport à l'avance de sorte que la fraise ne se met pas simultanément en prise sur la largeur du support.

7. Procédé selon l'une des revendications précédentes, dans lequel on enlève la face supérieure du revêtement dans une seule opération.

8. Procédé selon l'une des revendications précédentes, dans lequel on ne fond que la face inférieure de la feuille de recouvrement (42) sur le revêtement résiduel lors du soudage.

9. Procédé selon l'une des revendications précédentes, dans lequel on n'insère pas de matière supplémentaire entre le revêtement résiduel (41) et la feuille de recouvrement (42) lors du soudage.

10. Procédé selon l'une des revendications précédentes, dans lequel la feuille de recouvrement est soudée avec le support de manière continue.

11. Procédé selon l'une des revendications précédentes, dans lequel la feuille de recouvrement est guidée autour d'un rouleau (10) au niveau de la zone de soudage (11), la face inférieure de la feuille de recouvrement (42) étant notamment chauffée par des radiateurs thermiques (20).

12. Procédé selon la revendication 11, dans lequel le radiateur thermique agit sur la face inférieure de la feuille de recouvrement (42) et la surface dégagée du revêtement résiduel (41).

13. Procédé selon l'une des revendications précédentes, dans lequel la feuille de recouvrement (42) est pressée par le rouleau (10) contre le revêtement résiduel lors du soudage.

14. Procédé selon l'une des revendications précédentes, dans lequel d'autres rouleaux de pression sont prévus.

15. Procédé selon l'une des revendications précédentes, dans lequel on réalise des mesures d'alignement du support réparé, notamment l'alignement après le soudage, la préflexion contre les contraintes internes à attendre après le fraisage et avant le soudage ou l'introduction de chaleur simultanément des deux côtés du support lors du soudage.

16. Procédé selon l'une des revendications précédentes, comprenant les étapes suivantes :
c) démontage du support sous forme de plaque (1) dans le cadre d'un élément de coffrage avant l'étape a) ;
d) insertion et montage du support sous forme de plaque (1) dans le cadre du ou d'un autre élément de coffrage après l'étape b).

17. Procédé selon l'une des revendications précédentes, comprenant les étapes suivantes :
e) insertion du support et endommagement de la surface du support après l'étape b) ou d).

18. Procédé selon la revendication précédente, dans lequel on répète le procédé plusieurs fois et/ou on le réalise des deux côtés du support.

19. Support sous forme de plaque (1), notamment un support réparé selon les revendications de procédé précédentes,
dont au moins la face supérieure est revêtue d'un revêtement (4) fusible sous effet thermique, laquelle forme la surface du support, comprenant
- un revêtement résiduel inférieur (41),
- une zone de soudage intermédiaire (43), et
- une couche de recouvrement (42) qui forme la surface du support,
le revêtement résiduel inférieur (41), la zone de soudage intermédiaire (43) et la couche de recouvrement (42) consistant en la même matière, notamment en polypropylène et
seulement la face inférieure de la feuille de recouvrement (42) étant fondu là-dessus.

20. Support selon l'une des revendications précédentes, **caractérisé en ce que** le revêtement (4, 4') fusible sous effet thermique est prévu de part et d'autre du support, le revêtement (4, 4') étant complètement homogène sur la face inférieure du support.

21. Support selon l'une des revendications précédentes, **caractérisé en ce que** le support comprend un noyau (2) en matière artificielle, en matière mousseuse, en polypropylène, en particules de polypropylène faiblement pressées et/ou en mousse extrudée de polypropylène.

22. Support selon l'une des revendications précédentes, **caractérisé en ce que** le support comprend une couche de renforcement (3), notamment en métal, de préférence en aluminium.

23. Support selon l'une des revendications précédentes, **caractérisé en ce que** la couche de renforcement (3) est disposée entre le noyau (2) et le revêtement (4).

24. Support selon l'une des revendications précédentes, **caractérisé en ce que** la couche de renforcement (3, 3') est disposée des deux côtés du noyau (2).

25. Support selon l'une des revendications précédentes, **caractérisé en ce que** le support a une structure symétrique, le revêtement (4') sur la face inférieure du support pouvant aussi être complètement homogène.

26. Support selon l'une des revendications précédentes, **caractérisé en ce que** le noyau présente une épaisseur comprise entre 8 et 20 mm ;
la couche de renforcement en aluminium présente une épaisseur comprise entre 0,3 et 0,6 mm, de préférence entre 0,35 et 0,45 mm ;
le revêtement présente une épaisseur comprise entre 0,8 et 1,5 mm, de préférence entre 1,2 et 1,4 mm ; et/ou
l'épaisseur du revêtement résiduel est 10 - 50%, de préférence 20 - 40% de l'épaisseur du revêtement.

27. Support selon l'une des revendications précédentes, **caractérisé en ce que** le support est stable de sorte qu'il peut tenir du béton non durci en forme et le revêtement est tel qu'il peut former une surface de béton exposé et sera facilement détachable du béton durci.

28. Elément de coffrage comprenant un support selon l'une des revendications précédentes inséré dans celui-ci.
